# EUROPEAN PATENT APPLICATION

(11) **EP 4 184 839 A1**
(43) Date of publication of application: **24.05.2023**
(21) Application number: 20948517.6
(22) Date of filing: 05.08.2020
(51) Int. Cl.: H04L 5/00, H04W 72/04

(54) **COMMUNICATION METHOD AND APPARATUS**

(71) Applicant: Huawei Technologies Co., Ltd., Shenzhen, Guangdong 518129 (CN)
(72) Inventor: FU, Yu, Shenzhen, Guangdong 518129 (CN)
(74) Representative: Gill Jennings & Every LLP
(86) International application number: PCT/CN2020/107158
(87) International publication number: WO 2022/027334

(57) **Abstract**

This application provides a communication method and an apparatus. The method includes: A terminal device determines a target time-frequency resource in an uplink communication time period in a target subframe, where the target time-frequency resource is used to transmit an uplink sounding reference signal SRS and a physical uplink shared channel PUSCH. When performing the foregoing communication on the target time-frequency resource, the terminal device simultaneously sends the uplink SRS and the PUSCH to a network device. The uplink SRS and the PUSCH are multiplexed on a same symbol, so that transmission of the uplink SRS and the PUSCH on the same symbol (for example, a same time-frequency resource) can be ensured. Therefore, when an UpPTS of an S subframe is configured to transmit the uplink SRS, the PUSCH can also be transmitted, thereby improving resource utilization in an uplink communication time period in the target subframe, and improving a network throughput.

## Description

### TECHNICAL FIELD

This application relates to the field of communication technologies, and in particular, to a communication method and an apparatus.

### BACKGROUND

There is a special subframe (Special subframe, S subframe) in a communication system. Specifically, the S subframe includes a downlink pilot time slot (Downlink Pilot Time slot, DwPTS), a guard period (Guard Period, GP), and an uplink pilot time slot (Uplink Pilot Time slot, UpPTS). The UpPTS may transmit a sounding reference signal (Sounding Reference Signal, SRS) and a physical uplink shared channel (Physical Uplink Shared Channel, PUSCH).

If there is basically no idle symbol in the UpPTS in the S subframe other than symbols configured for transmitting uplink SRSs, the S subframe cannot transmit the PUSCH.

### SUMMARY

Embodiments of this application provide a communication method and apparatus, so that an uplink SRS and a PUSCH can multiplex a same time-frequency resource, thereby improving resource utilization in an uplink communication time period in a target subframe, and improving a network throughput.

According to a first aspect, an embodiment of this application provides a communication method, including:

A terminal device determines a target time-frequency resource in an uplink communication time period in a target subframe, where the target time-frequency resource is used to transmit an uplink SRS and a PUSCH.

The terminal device simultaneously sends the uplink SRS and the PUSCH to a network device on the target time-frequency resource.

The target time-frequency resource occupies at least one symbol in time domain, and the uplink SRS and the PUSCH occupy a same time-frequency resource.

In a possible implementation, before the terminal device simultaneously sends the uplink SRS and the PUSCH to the network device on the target symbol, the terminal device receives first information from the network device, where the first information indicates that the uplink SRS and the PUSCH are transmitted on a same time-frequency resource of the target subframe.

In a possible implementation, the terminal device receives second information from the network device, where the second information indicates the target time-frequency resource.

In a possible implementation, the target subframe is an S subframe.

According to a second aspect, an embodiment of this application provides a communication method, including:

A network device simultaneously receives an uplink SRS and a PUSCH from a terminal device on a target time-frequency resource in an uplink communication time period in a target subframe, where the target time-frequency resource is used to transmit the uplink SRS and the PUSCH.

The network device processes the uplink SRS and the PUSCH.

The target time-frequency resource occupies at least one symbol in time domain, and the uplink SRS and the PUSCH occupy a same time-frequency resource.

In a possible implementation, the network device sends first information to the terminal device, where the first information indicates that the uplink SRS and the PUSCH are transmitted on a same time-frequency resource of the target subframe.

In a possible implementation, the network device sends second information to the terminal device, where the second information indicates the target time-frequency resource.

According to a third aspect, an embodiment of this application provides a communication apparatus, including:
a processing module, configured to determine a target time-frequency resource in an uplink communication time period in a target subframe, where the target time-frequency resource is used to transmit an uplink SRS and a PUSCH; and
a transceiver module, configured to simultaneously send the uplink SRS and the PUSCH to a network device on the target time-frequency resource, where
the target time-frequency resource occupies at least one symbol in time domain, and the uplink SRS and the PUSCH occupy a same time-frequency resource.

In a possible implementation, the transceiver module is further configured to: before simultaneously sending the uplink SRS and the PUSCH to the network device on the target symbol, receive first information from the network device, where the first information indicates that the uplink SRS and the PUSCH are transmitted on a same time-frequency resource of the target subframe.

In a possible implementation, the transceiver module is further configured to receive second information from the network device, where the second information indicates the target time-frequency resource.

According to a fourth aspect, an embodiment of this application provides a communication apparatus, including:
a transceiver module, configured to simultaneously receive an uplink SRS and a PUSCH from a terminal device on a target time-frequency resource in an uplink communication time period in a target subframe, where the target time-frequency resource is used to transmit the uplink SRS and the PUSCH; and
a processing module, configured to process the uplink SRS and the PUSCH, where
the target time-frequency resource occupies at least one symbol in time domain, and the uplink SRS and the PUSCH occupy a same time-frequency resource.

In a possible implementation, the transceiver module is further configured to send first information to the terminal device, where the first information indicates that the uplink SRS and the PUSCH are transmitted on a same time-frequency resource of the target subframe.

In a possible implementation, the transceiver module is further configured to send second information to the terminal device, where the second information indicates the target time-frequency resource.

According to a fifth aspect, an embodiment of this application provides a communication apparatus, including:
a module, component, or circuit configured to implement the communication method according to the first aspect; or
a module, component, or circuit configured to implement the communication method according to the second aspect.

According to a sixth aspect, an embodiment of this application provides a communication apparatus, including a memory, a processor, and a transceiver, where
the memory is configured to store program instructions;
the transceiver is configured to receive and send data under control of the processor; and
the processor is configured to invoke the program instructions in the memory to perform the communication method according to the first aspect or the communication method according to the second aspect.

According to a seventh aspect, an embodiment of this application provides a chip, including at least one processor and a communication interface, where the communication interface and at least one processor are interconnected through a line, and the at least one processor is configured to run a computer program or instructions, to perform the communication method according to the first aspect or the communication method according to the second aspect.

According to an eighth aspect, an embodiment of this application provides a computer-readable storage medium, including instructions, and when the instructions are run on a computer, the computer is enabled to perform the communication method according to the first aspect or the communication method according to the second aspect.

According to a ninth aspect, an embodiment of this application provides a computer program product including instructions, and when the instructions are run on a computer, the computer is enabled to perform the communication method according to the first aspect or the communication method according to the second aspect.

According to a tenth aspect, an embodiment of this application provides a communication system, including any one of the terminal devices and any one of the network devices.

With reference to any one of the first aspect to the tenth aspect, the following description may be further included:

Optionally, the target time-frequency resource occupies all symbols of an uplink communication time period in the target subframe in time domain.

Optionally, the symbols occupied by the target time-frequency resource include a first symbol and a second symbol, where the first symbol includes at least one symbol, and the second symbol includes at least one symbol.

Apart of frequency domain resources in the first symbol is used to transmit an uplink SRS and a PUSCH, and all frequency domain resources in the second symbol are used to transmit the uplink SRS and the PUSCH.

Optionally, the other part of frequency domain resources in the first symbol is used to transmit a demodulation reference signal DMRS of the PUSCH.

Optionally, each resource element RE in the part of frequency domain resources and each RE in the other part of frequency domain resources are spaced apart from each other.

Optionally, the first symbol is the 1^{st} symbol of the uplink communication time period in the target subframe.

Optionally, the target time-frequency resource is all frequency domain resources of all symbols of the uplink communication time period in the target subframe.

Optionally, the target time-frequency resource occupies, in time domain, some symbols of the uplink communication time period in the target subframe.

Optionally, other symbols in the uplink communication time period in the target subframe except the symbols occupied by the target time-frequency resource are used to transmit the demodulation reference signal (Demodulation Reference Signal, DMRS) of the PUSCH.

Optionally, the symbols occupied by the target time-frequency resource are symbols except the 1^{st} symbol in the uplink communication time period in the target subframe.

In conclusion, according to the communication method and apparatus provided in embodiments of this application, the uplink SRS and the PUSCH are multiplexed on a same symbol, so that transmission of the uplink SRS and the PUSCH on the same symbol (for example, a same time-frequency resource) can be ensured. Therefore, when an UpPTS of an S subframe is configured to transmit the uplink SRS, the PUSCH can also be transmitted, thereby improving resource utilization in an uplink communication time period in a target subframe, and improving a network throughput.

### BRIEF DESCRIPTION OF DRAWINGS

FIG. 1 is a schematic diagram of a communication system according to an embodiment of this application;
FIG. 2 is a schematic diagram of a protocol stack of a network device according to an embodiment of this application;
FIG. 3 is a flowchart of a communication method according to an embodiment of this application;
FIG. 4 is a schematic diagram of a target subframe according to an embodiment of this application;
FIG. 5 is a schematic diagram in which an uplink-downlink subframe configuration is 8:2 according to an embodiment of this application;
FIG. 6 is a schematic diagram in which an uplink-downlink subframe configuration is 4:1 according to an embodiment of this application;
FIG. 7 is a schematic diagram in which an uplink-downlink subframe configuration is 7:3 according to an embodiment of this application;
FIG. 8 is a flowchart of a communication method according to another embodiment of this application;
FIG. 9a and FIG. 9b are schematic diagrams of an uplink SRS and a PUSCH multiplexing in an S subframe according to an embodiment of this application;
FIG. 10a and FIG. 10b are schematic diagrams of an uplink SRS and a PUSCH multiplexing in an S subframe according to another embodiment of this application;
FIG. 11a and FIG. 11b are schematic diagrams of an uplink SRS and a PUSCH multiplexing in an S subframe according to another embodiment of this application;
FIG. 12 is a schematic diagram of a structure of a communication apparatus according to an embodiment of this application;
FIG. 13 is a schematic diagram of a structure of a communication apparatus according to another embodiment of this application;
FIG. 14 is a schematic diagram of a structure of a communication apparatus according to another embodiment of this application;
FIG. 15 is a schematic diagram of a structure of a terminal device according to an embodiment of this application; and
FIG. 16 is a schematic diagram of a structure of a communication system according to an embodiment of this application.

### DESCRIPTION OF EMBODIMENTS

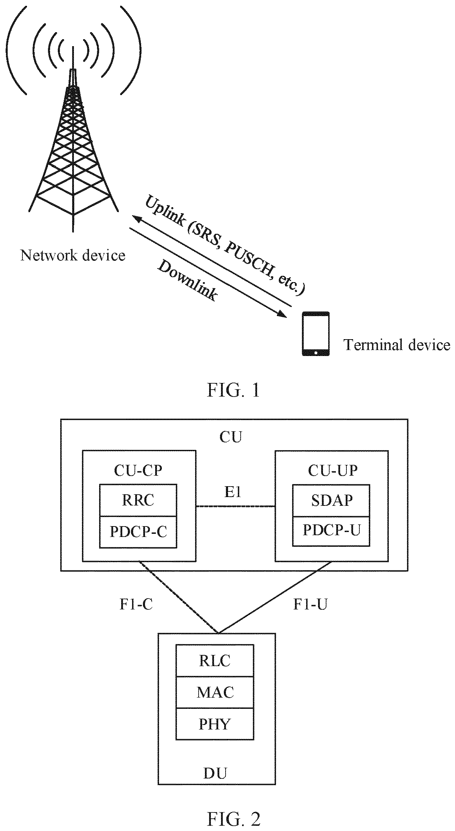

FIG. 1 is a schematic diagram of a communication system according to an embodiment of this application. As shown in FIG. 1, a communication system includes a network device and a terminal device.

In the following, some terms in this application are described, to help a person skilled in the art have a better understanding.

A network device is also referred to as a radio access network (Radio Access Network, RAN) device, is a device that connects a terminal device to a wireless network, and may be an evolved NodeB (Evolutional Node B, eNB, or eNodeB) in long term evolution (Long Term Evolution, LTE), or a relay station or an access point, or a base station in a 5G network, such as a transmission and reception point (Transmission and Reception Point, TRP) or a controller. This is not limited herein. In a possible manner, an access network device may be a base station (for example, a gNB) of a CU-DU split architecture. FIG. 2 is a schematic diagram of a protocol stack of a network device according to an embodiment of this application. The RAN device may be connected to a core network device (which may be, for example, a core network of LTE, or may be a core network of 5G). It may be understood that the base station is divided into the CU and the DU from the perspective of a logical function. The CU and the DU may be physically separated or deployed together. A plurality of DUs may share one CU. One DU may also be connected to a plurality of CUs (not shown in the figure). The CU and the DU may be connected through an interface, for example, an F1 interface. The CU and the DU may be divided based on a protocol layer of a wireless network. For example, functions of a radio resource control (Radio Resource Control, RRC), a service data adaptation protocol (Service Data Adaptation Protocol, SDAP), and a packet data convergence protocol (packet data convergence protocol, PDCP) layer are set on the CU, and functions of a radio link control (radio link control, RLC), a media access control (Media Access Control, MAC) layer, a physical (physical, PHY) layer, and the like are set on the DU. It may be understood that division of the CU and DU processing functions based on this protocol layer is merely an example, and the division may be alternatively performed in another manner. For example, the CU or the DU may be divided into functions that have more protocol layers. For example, the CU or the DU may alternatively have some processing functions of the protocol layers through division. In a design, some functions of the RLC layer and the functions of protocol layers above the RLC layer are set in the CU, and remaining functions of the RLC layer and functions of protocol layers below the RLC layer are set in the DU. In another design, functions of the CU or the DU may be alternatively divided based on a service type or another system requirement. For example, division is performed based on a latency. A function whose processing time needs to satisfy a latency requirement is disposed on the DU, and a function whose processing time does not need to satisfy the latency requirement is disposed on the CU. In another design, the CU may alternatively have one or more functions of the core network. One or more CUs may be disposed centrally or separately. For example, the CUs may be disposed on a network side for ease of centralized management. The DU may have a plurality of radio frequency functions, or the radio frequency functions may be set remotely.

A function of the CU may be implemented by one entity or may be implemented by different entities. For example, the function of the CU may be further divided, for example, a control plane (CP) is separated from a user plane (UP), that is, a control plane of the CU (CU-CP) is separated from a user plane of the CU (CU-UP). For example, the CU-CP and the CU-UP may be implemented by different functional entities, and the CU-CP and the CU-UP may be coupled to the DU to jointly implement functions of the base station. In a possible manner, the CU-CP is responsible for control plane functions, and mainly includes an RRC and a PDCP-C. The PDCP-C is mainly responsible for encryption and decryption of control plane data, integrity protection, data transmission, and the like. The CU-UP is responsible for user plane functions, and mainly includes an SDAP and a PDCP-U. The SDAP is mainly responsible for processing data of a core network and mapping a data flow (flow) to a bearer. The PDCP-U is mainly responsible for encryption and decryption of user plane data, integrity protection, header compression, serial number maintenance, data transmission, and the like. The CU-CP and the CU-UP are connected through an E1 interface. The gNB is connected to the core network through an Ng interface. The CU-CP is connected to the DU by using an F1-C (control plane). The CU-UP is connected to the DU by using an F1-U (user plane). Certainly, another possible implementation is that the PDCP-C is also in the CU-UP.

A terminal device may be a wireless terminal device or may be a wired terminal device. The wireless terminal device may be a device with a wireless transceiver function, and may be deployed on land, including indoor or outdoor, handheld or vehicle-mounted; may also be deployed on water (such as a ship); and may also be deployed in the air (such as an aircraft, a balloon, and a satellite). The terminal device may be a mobile phone (mobile phone), a tablet computer (Pad), a computer with a wireless transceiver function, a virtual reality (Virtual Reality, VR) terminal, an augmented reality (Augmented Reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited herein. It may be understood that, in this embodiment of this application, the terminal device may also be referred to as user equipment (user equipment, UE).

The network device may send downlink information to the terminal device in a downlink communication time period. The terminal device may send uplink information to the network device in an uplink communication time period. The downlink communication time period includes a downlink subframe and a DwPTS in an S subframe, and the uplink communication time period includes an uplink subframe and an UpPTS in the S subframe. The terminal device may send an uplink SRS to the network device in the UpPTS in the S subframe, or the terminal device may send a PUSCH to the network device in the UpPTS in the S subframe.

Currently, if there is basically no idle symbol in the UpPTS in the S subframe other than symbols configured for transmitting the uplink SRS, the S subframe cannot transmit the PUSCH. Consequently, this application provides a communication method and apparatus. The uplink SRS and the PUSCH are multiplexed on a same symbol. In this way, it can be ensured that the uplink SRS and the PUSCH are transmitted on the same symbol (for example, a same time-frequency resource). Therefore, when the UpPTS of the S subframe is configured to transmit the uplink SRS, the PUSCH can also be transmitted.

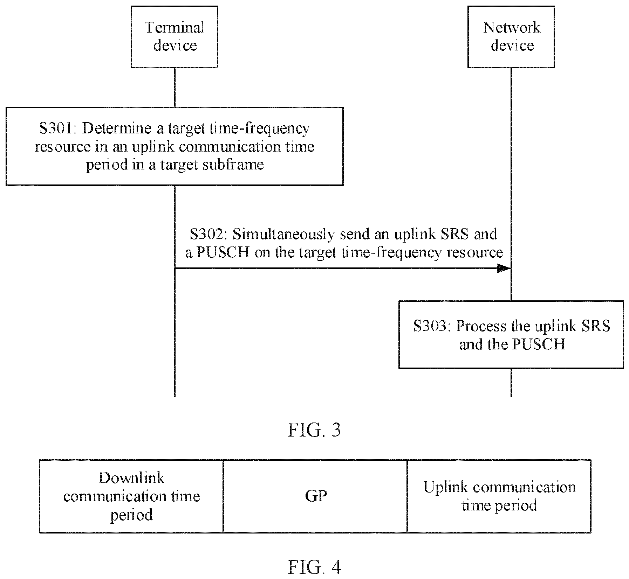

FIG. 3 is a flowchart of a communication method according to an embodiment of this application. As shown in FIG. 3, the method in this embodiment may include the following steps.

S301: A terminal device determines a target time-frequency resource in an uplink communication time period in a target subframe. The target time-frequency resource is used to transmit an uplink SRS and a PUSCH.

The target subframe in this embodiment includes a downlink communication time period, a guard period (Guard Period, GP), and an uplink communication time period, for example, as shown in FIG. 4. The GP is located between the downlink communication time period and the uplink communication time period, and is used to isolate the downlink communication time period and the uplink communication time period. A subframe includes a plurality of orthogonal frequency division multiplexing (Orthogonal Frequency Division Multiplexing, OFDM) symbols in time domain, for example, 14 OFDM symbols. The downlink communication time period may be X OFDM symbols in the subframe, the GP may be Y OFDM symbols in the subframe, and the uplink communication time period may be Z OFDM symbols in the subframe. In this embodiment, X, Y, and Z are integers greater than 0.

In a possible implementation, the foregoing target subframe may be a special subframe (S subframe).

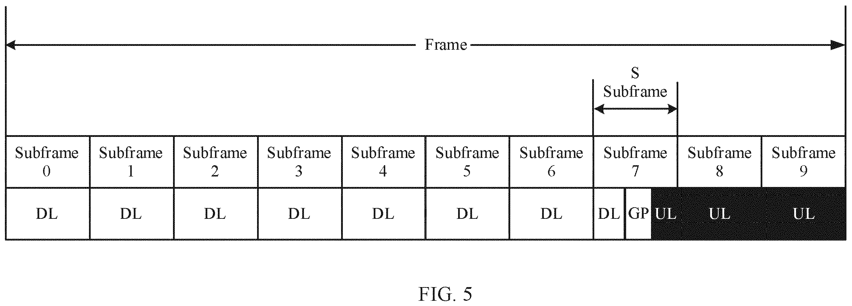

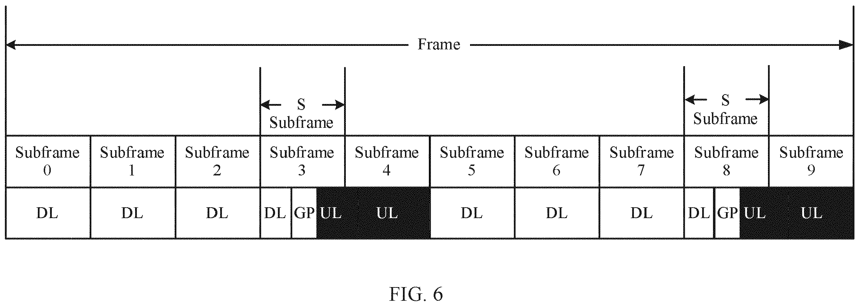

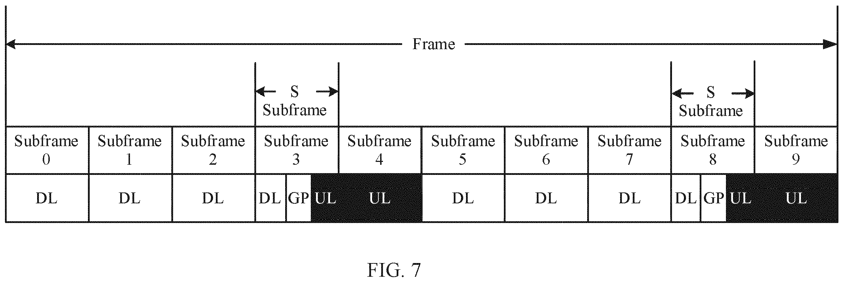

In this embodiment, a quantity of symbols of the uplink communication time period used for uplink transmission is variable, to be specific, Z varies, and a length of Z is affected by an uplink-downlink subframe configuration in an NR protocol. Therefore, in this embodiment, the length of Z may be determined based on an uplink-downlink subframe configuration in a frame. For example, when an uplink-downlink subframe configuration is 8:2, as shown in FIG. 5, a quantity ratio of downlink symbols to symbols of a guard interval to uplink symbols of a target subframe (for example, an S subframe) is 6:4:4, and correspondingly, a length of an uplink communication time period is four symbols. When an uplink-downlink subframe configuration is 4:1 (as shown in FIG. 6) or 7:3 (as shown in FIG. 7), in this case, a quantity ratio of downlink symbols to symbols of the guard interval to uplink symbols of the S subframe is 10:2:2, and a length of an uplink communication time period is two symbols. FIG. 5 to FIG. 7 are shown by using an example in which one subframe includes one time slot. However, this embodiment is not limited thereto.

In this embodiment, the terminal device determines a time-frequency resource that is in the uplink communication time period in the foregoing target subframe and that is used to transmit the uplink SRS and the PUSCH. The time-frequency resource is referred to as the target time-frequency resource. The target time-frequency resource occupies at least one symbol in time domain, which indicates that the terminal device simultaneously sends the uplink SRS and the PUSCH by using at least one symbol in the uplink communication time period.

S302: The terminal device simultaneously sends the uplink SRS and the PUSCH to a network device on the target time-frequency resource. Correspondingly, the network device simultaneously receives the uplink SRS and the PUSCH from the terminal device on a target time domain resource in the uplink communication time period in the target subframe.

After determining the target time-frequency resource in the uplink communication time period in the target subframe, the terminal device simultaneously sends the uplink SRS and the PUSCH to the network device on the target time-frequency resource. The uplink SRS and the PUSCH that are sent simultaneously occupy a same time-frequency resource, which indicates that the uplink SRS occupies the target time-frequency resource, and the PUSCH also occupies the target time-frequency resource. Correspondingly, the network device simultaneously receives the uplink SRS and the PUSCH from the terminal device on the target time-frequency resource in the uplink communication time period in the target subframe.

S303: The network device processes the uplink SRS and the PUSCH.

After simultaneously receiving the uplink SRS and the PUSCH on the target time-frequency resource, the network device processes the uplink SRS and the PUSCH. The uplink SRS is used for uplink channel estimation, and the network device may perform uplink channel estimation based on the uplink SRS. The PUSCH is used to carry uplink data sent by the terminal device to the network device. The network device obtains the uplink data from the terminal device based on the PUSCH, and then performs corresponding processing based on the uplink data. For a specific implementation process, refer to descriptions in a related technology. Details are not described herein again.

Optionally, in a process in which the network device simultaneously receives the uplink SRS and the PUSCH on the target time-frequency resource, the network device may receive the PUSCH from the terminal device by using an IRC receiver on the target time-frequency resource, to perform interference suppression, and to avoid interference caused when the uplink SRS and the PUSCH are transmitted on the same time-frequency resource.

According to the communication method provided in this embodiment, the terminal device determines the target time-frequency resource on which the uplink SRS and the PUSCH are simultaneously transmitted in the uplink communication time period in the target subframe, and then simultaneously sends the uplink SRS and the PUSCH to the network device on the target time-frequency resource. In this way, the uplink SRS and the PUSCH can multiplex the same time-frequency resource, so that there is basically no idle resource when the target subframe schedules the uplink SRS, and the PUSCH can also be scheduled and transmitted, thereby improving resource utilization in the uplink communication time period in the target subframe, and improving a network throughput.

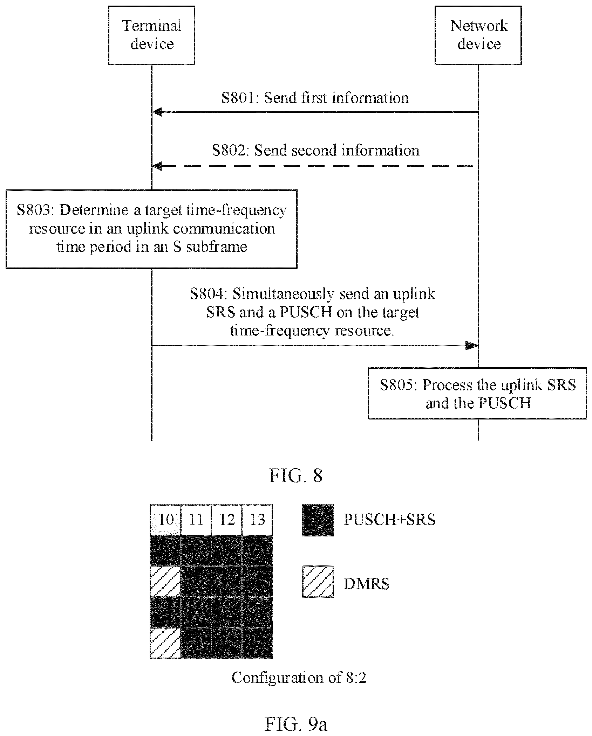

FIG. 8 is a flowchart of a communication method according to another embodiment of this application. As shown in FIG. 8, the method in this embodiment uses a target subframe as an S subframe. This embodiment may not be limited thereto. The method in this embodiment may include the following steps.

S801: A network device sends first information to a terminal device. Correspondingly, the terminal device receives the first information from the network device.

In this embodiment, after the network device determines that the terminal device needs to perform an uplink SRS and a PUSCH multiplexing on a same time-frequency resource for transmission, the network device sends the first information to the terminal device, where the first information indicates that the uplink SRS and the PUSCH are transmitted on the same time-frequency resource in an uplink communication time period of the S subframe. Correspondingly, the terminal device receives the first information from the network device, and may determine, based on the first information, that the uplink SRS and the PUSCH may be transmitted on the same time-frequency resource in the uplink communication time period of the S subframe. Optionally, the first information is included in an RRC reconfiguration message sent by the network device to the terminal device.

In a possible implementation, if the network device determines that the terminal device is an uplink full buffer user, the network device determines that the terminal device needs to perform uplink SRS and PUSCH multiplexing on the same time-frequency resource for transmission, and then sends the first information to the terminal device. For example, an L2 layer of the network device identifies whether the terminal device is an uplink full buffer user, and the L2 layer periodically transfers a status of whether the terminal device is an uplink full buffer user to an L3 layer of the network device. The L3 layer triggers simultaneous scheduling of the uplink SRS and the PUSCH in the S subframe, that is, the network device sends the first information to the terminal device. The uplink full buffer user may be a user who occupies full bandwidth, and scheduling frequency is quite high.

Optionally, in the method of this embodiment, S803 is performed after S801 is performed, or the following S802 may be performed before S803 is performed.

S802: The network device sends second information to the terminal device. Correspondingly, the terminal device receives the second information from the network device.

The network device may determine a target time-frequency resource that is in the uplink communication time period of the S subframe and that is used to simultaneously transmit the uplink SRS and the PUSCH, and then send the second information to the terminal device, where the second information indicates the target time-frequency resource (which may be specifically a time domain location and a frequency domain location of the target time-frequency resource). Correspondingly, the terminal device receives the second information from the network device.

Optionally, the network device may add the first information and the second information to a same message, and send the message to the terminal device. Alternatively, the network device may respectively add the first information and the second information to different messages, and send the messages to the terminal device.

Optionally, the second information is included in the RRC reconfiguration message sent by the network device to the terminal device.

S803: The terminal device determines the target time-frequency resource in the uplink communication time period in the S subframe.

In this embodiment, after receiving the first information, the terminal device determines the target time-frequency resource in the uplink communication time period in the S subframe.

Optionally, if the terminal device receives the second information from the network device, the terminal device determines, based on the second information, the target time-frequency resource in the uplink communication time period in the S subframe.

S804: The terminal device simultaneously sends the uplink SRS and the PUSCH to the network device on the target time-frequency resource. Correspondingly, the network device simultaneously receives the uplink SRS and the PUSCH from the terminal device on the target time domain resource in the uplink communication time period in the S subframe.

S805: The network device processes the uplink SRS and the PUSCH.

In this embodiment, for a specific implementation process of S804 and S805, refer to related descriptions in the embodiment shown in FIG. 3. Details are not described herein again.

According to the communication method provided in this embodiment, the network device indicates the terminal device to simultaneously send the uplink SRS and the PUSCH on the target time-frequency resource in the uplink communication time period in the S subframe. Then the terminal device simultaneously sends the uplink SRS and the PUSCH to the network device on the target time-frequency resource. In this way, the uplink SRS and the PUSCH can multiplex the same time-frequency resource, so that there is basically no idle resource when the target subframe schedules the uplink SRS, and the PUSCH can also be scheduled and transmitted, thereby improving resource utilization in the uplink communication time period in the target subframe, and improving a network throughput.

On the basis of the foregoing embodiments shown in FIG. 3 or FIG. 8, in some embodiments, the foregoing target time-frequency resource occupies all symbols of the uplink communication time period in the S subframe in time domain. This indicates that each symbol in the uplink communication time period in the S subframe may be used to transmit the uplink SRS and the PUSCH. If an uplink-downlink subframe configuration is 8:2, the target time-frequency resource occupies a symbol 10 to a symbol 13 of the S subframe in time domain. If an uplink-downlink subframe configuration is 4:1 or 7:3, the target time-frequency resource occupies a symbol 12 and the symbol 13 of the S subframe in time domain.

In a possible implementation, all symbols of the uplink communication time period in the S subframe occupied by the target time-frequency resource include a first symbol and a second symbol, the first symbol includes at least one symbol, and the second symbol includes at least one symbol. A part of frequency domain resources in the first symbol is used to transmit the uplink SRS and the PUSCH, and all frequency domain resources in the second symbol are used to transmit the uplink SRS and the PUSCH. This indicates that all frequency domain resources in some symbols in the uplink communication time period in the S subframe are used to simultaneously transmit the uplink SRS and the PUSCH, and not all frequency domain resources in the other symbols are used to simultaneously transmit the uplink SRS and the PUSCH. Actually, a part of frequency domain resources in the other symbols is used to simultaneously transmit the uplink SRS and the PUSCH.

Optionally, the first symbol is the 1^{st} symbol of the uplink communication time period in the S subframe.

If an uplink-downlink subframe configuration is 8:2, the first symbol is the symbol 10 of the S subframe, and the second symbol is a symbol 11 to the symbol 13. That is, the terminal device simultaneously sends the uplink SRS and the PUSCH to the network device on a part of frequency domain resources of the symbol 10, and simultaneously sends the uplink SRS and the PUSCH to the network device on all frequency domain resources of the symbol 11 to the symbol 13.

If an uplink-downlink subframe configuration is 4:1 or 7:3, the first symbol is the symbol 12 of the S subframe, and the second symbol is the symbol 13. That is, the terminal device simultaneously sends the uplink SRS and the PUSCH to the network device on a part of frequency domain resources of the symbol 12, and simultaneously sends the uplink SRS and the PUSCH to the network device on all frequency domain resources of the symbol 13.

Optionally, the other part of frequency domain resources in the first symbol is used to transmit a DMRS of the PUSCH, so that the network device performs uplink channel estimation based on the received DMRS from the terminal device. If an uplink-downlink subframe configuration is 8:2, the first symbol is the symbol 10 of the S subframe. That is, the terminal device simultaneously sends the uplink SRS and the PUSCH to the network device on a part of frequency domain resources of the symbol 10, and sends the DMRS to the network device on the other part of the frequency domain resources of the symbol 10. If an uplink-downlink subframe configuration is 4:1 or 7:3, the first symbol is the symbol 12 of the S subframe. That is, the terminal device simultaneously sends the uplink SRS and the PUSCH to the network device on a part of frequency domain resources of the symbol 12, and sends the DMRS to the network device on the other part of the frequency domain resources of the symbol 12.

Optionally, a part of frequency domain resources that are in the foregoing first symbol and that are used to simultaneously transmit the uplink SRS and the PUSCH and the remaining part of the frequency domain resources comb the first symbol.

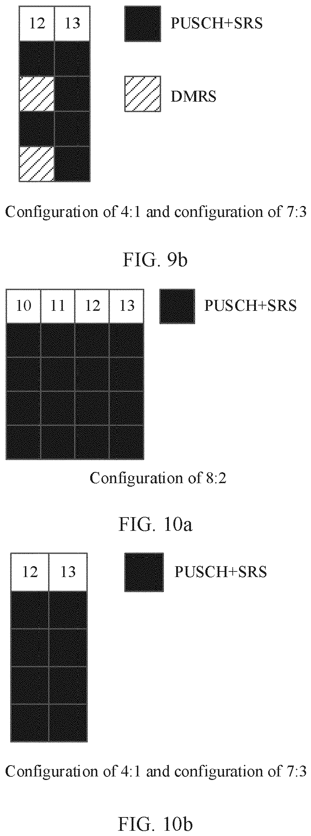

In a possible implementation, in the first symbol, each RE of the part of the frequency domain resources that are used to simultaneously transmit the uplink SRS and the PUSCH and each RE of the remaining part of the frequency domain resources are combed in a manner of being spaced apart from each other. If an uplink-downlink subframe configuration is 8:2, REs for transmitting the uplink SRS and the PUSCH are combed with REs for transmitting the DMRS in the symbol 10 of the S subframe. As shown in FIG. 9a, a gain of 3.5/24 may be achieved by using this solution. If an uplink-downlink subframe configuration is 4:1 or 7:3, REs for transmitting the uplink SRS and the PUSCH are combed with REs for transmitting the DMRS in the symbol 12 of the S subframe. As shown in FIG. 9b, in this solution, a gain of 1.5/12 may be achieved at a configuration of 4:1, and a gain of 3/36 may be achieved at a configuration of 7:3.

In another possible implementation, in the first symbol, every two REs of the part of the frequency domain resources that are used to simultaneously transmit the uplink SRS and the PUSCH and every two REs of the remaining part of the frequency domain resources are combed in a manner of being spaced apart from each other.

In another possible implementation, the target time-frequency resource is all frequency domain resources of all symbols of the uplink communication time period in the S subframe.

If an uplink-downlink subframe configuration is 8:2, the target time-frequency resource is all frequency domain resources of the symbol 10 to the symbol 13 of the S subframe. That is, the terminal device simultaneously sends the uplink SRS and the PUSCH to the network device on all frequency domain resources of the symbol 10 to the symbol 13 of the S subframe. As shown in FIG. 10a, a gain of 4/24 may be achieved by using this solution. If an uplink-downlink subframe configuration is 4:1 or 7:3, the target time-frequency resource is all frequency domain resources of the symbol 12 to the symbol 13 of the S subframe. As shown in FIG. 10b, in this solution, a gain of 2/12 may be achieved at a configuration of 4:1, and a gain of 4/36 may be achieved at a configuration of 7:3.

Optionally, the terminal device does not send the DMRS to the network device in the S subframe, but sends the DMRS in a subsequent uplink subframe, so that the network device performs uplink channel estimation.

On the basis of the foregoing embodiments shown in FIG. 3 or FIG. 8, in some other embodiments, the target time-frequency resource occupies some symbols of the uplink communication time period in the S subframe in time domain. This indicates that not all symbols in the uplink communication time period in the S subframe can be used to transmit the uplink SRS and the PUSCH. If an uplink-downlink subframe configuration is 8:2, the target time-frequency resource occupies some symbols in the symbol 10 to the symbol 13 of the S subframe in time domain. If an uplink-downlink subframe configuration is 4:1 or 7:3, the target time-frequency resource occupies some symbols in the symbol 12 and the symbol 13 of the S subframe in time domain.

Optionally, symbols other than symbols occupied by the target time-frequency resource in the uplink communication time period in the S subframe are used to transmit the DMRS of the PUSCH. If an uplink-downlink subframe configuration is 8:2, the terminal device simultaneously sends the uplink SRS and the PUSCH to the network device on some symbols in the symbol 10 to the symbol 13 of the S subframe, and sends the DMRS to the network device on other symbols in the symbol 10 to the symbol 13. If an uplink-downlink subframe configuration is 4:1 or 7:3, the terminal device simultaneously sends the uplink SRS and the PUSCH to the network device on some symbols in the symbol 12 and the symbol 13 of the S subframe, and sends the DMRS to the network device on other symbols in the symbol 12 and the symbol 13.

Optionally, the symbols occupied by the target time-frequency resource are symbols other than the 1^{st} symbol in the uplink communication time period in the S subframe.

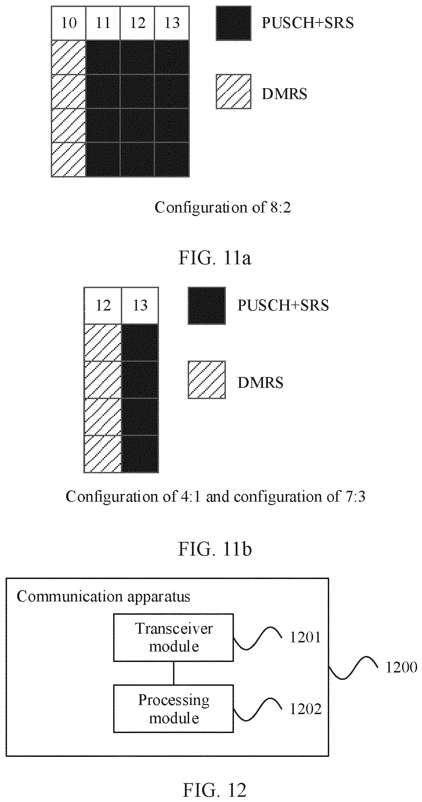

If an uplink-downlink subframe configuration is 8:2, the target time-frequency resource is all frequency domain resources of the symbol 11 to the symbol 13 of the S subframe. That is, the terminal device sends the DMRS to the network device on all frequency domain resources of the symbol 10 of the S subframe, and simultaneously sends the uplink SRS and the PUSCH to the network device on all frequency domain resources of the symbol 11 to the symbol 13. As shown in FIG. 11a, in this solution, a gain of 3/24 may be achieved. If an uplink-downlink subframe configuration is 4:1 or 7:3, the target time-frequency resource is all frequency domain resources of the symbol 13 of the S subframe, that is, the terminal device sends the DMRS to the network device on all frequency domain resources of the symbol 12 of the S subframe, and simultaneously sends the uplink SRS and the PUSCH to the network device on all frequency domain resources of the symbol 13. As shown in FIG. 11b, in this solution, a gain of 1/12 may be achieved at a configuration of 4:1, and a gain of 2/36 may be achieved at a configuration of 7:3.

It should be noted that the above mentioned all frequency domain resources in symbols may be all frequency domain resources allocated to the terminal device in the symbols.

During specific implementation, the foregoing embodiments of this application may be, for example without limitation, applied to the following scenarios:

When a user uses a terminal device to perform a voice call or a video call or send a file with a large amount of data to a peer end, the terminal device may add uplink data to a PUSCH, and a part of the PUSCH is transmitted through an uplink subframe (as described in a related technology). The other part of the PUSCH is multiplexed with an uplink SRS on a same time-frequency resource of the foregoing target subframe (such as an S subframe) for transmission by the other part of the PUSCH by using the solutions in the foregoing embodiments of this application, so that the terminal device can transmit a larger amount of data in one frame, thereby improving uplink data sending efficiency of the terminal device and improving user experience.

In a possible example, when a network device determines that an uplink data volume of the terminal device is large, the network device may schedule the S subframe to transmit a part of uplink data of the terminal device. For example, the network device sends an RRC reconfiguration message to the terminal device, and an SLIV in the RRC reconfiguration message includes a new time domain scheduling table entry, where the table entry indicates scheduling the S subframe to transmit the PUSCH. After receiving the RRC reconfiguration message from the network device, the terminal device returns an RRC reconfiguration complete message to the network device, and then executes the solutions in the foregoing embodiments based on an indication of the time domain scheduling table entry added to the SLIV in the RRC reconfiguration message.

In some other embodiments, the uplink SRS and the PUSCH that are multiplexed into a same time-frequency resource of the target subframe (for example, the S subframe) are from different terminal devices. For example, a terminal device 1 sends an uplink SRS on a target time-frequency resource of a target subframe (for example, an S subframe), and a terminal device 2 sends a PUSCH on the target time-frequency resource of the target subframe. Correspondingly, the network device receives the uplink SRS and the PUSCH on the target time-frequency resource of the target subframe, where the uplink SRS is from the terminal device 1, and the PUSCH is from the terminal device 2. Optionally, the network device further sends, to the terminal device 1, indication information that indicates to transmit the uplink SRS in the S subframe, and the terminal device 1 sends the uplink SRS on the target time-frequency resource of the S subframe according to the indication information. The network device further sends, to the terminal device 2, indication information that indicates to transmit the PUSCH in the S subframe, and the terminal device 2 sends the PUSCH in the target time-frequency resource of the S subframe according to the indication information.

Therefore, in this embodiment, a PUSCH of one terminal device and an uplink SRS of another terminal device are multiplexed to a same resource, so as to improve a network throughput.

It should be noted that any one of the foregoing embodiments may be separately implemented, or at least two of the foregoing embodiments may be implemented in any combination. This is not limited herein.

It may be understood that, in the foregoing embodiments, operations and steps implemented by the terminal device may be alternatively implemented by a component (for example, a chip or a circuit) of the terminal device. This is not limited in this embodiment of this application. Operations and steps implemented by the network device may be alternatively implemented by a component (for example, a chip or a circuit) of the network device. This is not limited in this embodiment of this application.

FIG. 12 is a schematic diagram of a structure of a communication apparatus according to an embodiment of this application. As shown in FIG. 12, the communication apparatus may be a terminal device, may be a component of a terminal device (for example, an integrated circuit or a chip), or may be another communication module, configured to implement an operation corresponding to a terminal device in any one of the foregoing embodiments. A communication apparatus 1200 in this embodiment includes a transceiver module 1201 and a processing module 1202. The communication apparatus 1200 in this embodiment may implement the solution of the terminal device in any one of the foregoing embodiments by using the transceiver module 1201 and the processing module 1202. An implementation principle and a technical effect thereof are similar, and details are not described herein again.

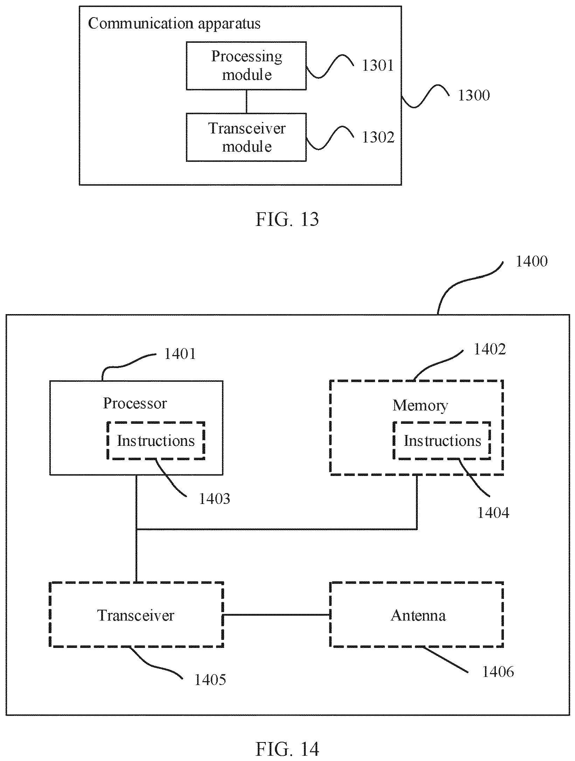

FIG. 13 is a schematic diagram of a structure of a communication apparatus according to another embodiment of this application. As shown in FIG. 13, the communication apparatus may be a network device, may be a component of a network device (for example, an integrated circuit or a chip), or may be another communication module, configured to implement an operation corresponding to a network device in any one of the foregoing embodiments. A communication apparatus 1300 in this embodiment includes a processing module 1301 and a transceiver module 1302. The communication apparatus 1300 in this embodiment may implement the network device solution in any one of the foregoing embodiments by using the processing module 1301 and the transceiver module 1302. An implementation principle and a technical effect thereof are similar, and details are not described herein again.

FIG. 14 is a schematic diagram of a structure of a communication apparatus according to another embodiment of this application. As shown in FIG. 14, a communication apparatus 1400 in this embodiment may be a terminal device (or a component that can be used for a terminal device) or a network device (or a component that can be used for a network device) mentioned in the foregoing method embodiment. The communication apparatus may be configured to implement the method corresponding to a terminal device or a network device described in the foregoing method embodiment. For details, refer to descriptions in the foregoing method embodiment.

The communication apparatus 1400 may include one or more processors 1401. The processor 1401 may also be referred to as a processing unit, and may implement a specific control or processing function. The processor 1401 may be a general-purpose processor, a dedicated processor, or the like. For example, the processor 1401 may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program.

In a possible design, the processor 1401 may further store instructions 1403 or data (for example, intermediate data). The instructions 1403 may be run by the processor, so that the communication apparatus 1400 performs the method corresponding to the terminal device or the network device described in the foregoing method embodiment.

In still another possible design, the communication apparatus 1400 may include a circuit, and the circuit may implement a function of sending, receiving, or communicating in the foregoing method embodiment.

In a possible implementation, the communication apparatus 1400 may include one or more memories 1402, which may store instructions 1404. The instructions may be run on the processor, so that the communication apparatus 1400 performs the method corresponding to the terminal device or the network device described in the foregoing method embodiment.

In a possible implementation, the memory may also store data. The processor and the memory may be separately disposed, or may be integrated together.

In a possible implementation, the communication apparatus 1400 may further include a transceiver 1405 and/or an antenna 1406. The processor 1401 may be referred to as a processing unit, and controls a communication apparatus (a terminal device, a core network device, or a radio access network device). The transceiver 1405 may be referred to as a transceiver unit, a transceiver, a transceiver circuit, or a transceiver, and is configured to implement a transceiver function of a communication apparatus.

In a design, if the communication apparatus 1400 is configured to implement an operation corresponding to the terminal device in the foregoing embodiments, for example, the processor 1401 may determine a target time-frequency resource in an uplink communication time period in a target subframe, and the transceiver 1405 simultaneously sends an uplink SRS and a PUSCH to a network device on the target resource.

For a specific implementation process of the processor 1401 and the transceiver 1405, refer to related descriptions of the terminal device in the foregoing embodiments. Details are not described herein again.

In another design, if the communication apparatus is configured to implement an operation corresponding to the network device in the foregoing embodiments, for example,
the transceiver 1405 may simultaneously receive the uplink SRS and the PUSCH from the terminal device on the target time-frequency resource in the uplink communication time period in the target subframe. The processor 1401 may process the uplink SRS and the PUSCH.

For a specific implementation process of the processor 1401 and the transceiver 1405, refer to related descriptions of the network device in the foregoing embodiments. Details are not described herein again.

The processor 1401 and the transceiver 1405 described in this application may be implemented in an integrated circuit (integrated circuit, IC), an analog IC, a radio frequency integrated circuit (radio frequency integrated circuit, RFIC), a mixed signal IC, an application-specific integrated circuit (application specific integrated circuit, ASIC), a printed circuit board (printed circuit board, PCB), an electronic device, and the like. The processor and the transceiver may be alternatively fabricated by using various 1C process technologies, such as a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In the foregoing embodiment description, the communication apparatus 1400 uses the terminal device or the network device as an example for description. However, a scope of the communication apparatus described in this application is not limited to the terminal device or the network device, and a structure of the communication apparatus may not be limited by FIG. 14. The communication apparatus 1400 may be an independent device or may be a part of a large device. For example, the device may be:
(1) an independent integrated circuit IC, a chip, or a chip system or subsystem;
(2) a set that includes one or more ICs, and in a possible implementation, the IC set may also include a storage component configured to store data and/or instructions;
(3) an ASIC, for example, a modem (MSM);
(4) a module that can be embedded in another device;
(5) a receiver, a wireless device, a mobile unit, a network device, or the like; or
(6) another device, or the like.

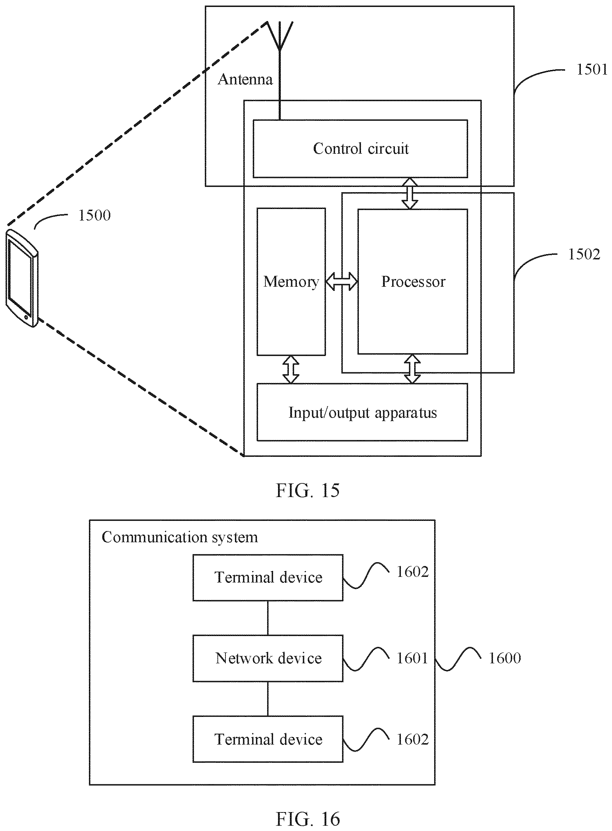

FIG. 15 is a schematic diagram of a structure of a terminal device according to an embodiment of this application. The terminal device is applicable to the terminal device in the foregoing embodiments of this application. For ease of description, FIG. 15 shows only main components of the terminal device. As shown in FIG. 15, a terminal device 1500 includes a processor, a memory, a control circuit, an antenna, and an input/output apparatus. The processor is mainly configured to process a communication protocol and communication data, and control the entire terminal, execute a software program, and process data of the software program. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user.

After the terminal device is powered on, the processor may read the software program in a storage unit, interpret and execute instructions of the software program, and process data of the software program. When the processor needs to send data wirelessly, after performing baseband processing on the to-be-sent data, the processor outputs a baseband signal to the radio frequency circuit. After performing radio frequency processing on the baseband signal, the radio frequency circuit sends a radio frequency signal in the form of an electromagnetic wave through the antenna. When the data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 15 shows only one memory and one processor. In an actual terminal device, there may be a plurality of processors and a plurality of memories. The memory may also be referred to as a storage medium, a storage device, or the like. This is not limited in embodiments of this application.

In a possible implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 15 integrates functions of the baseband processor and the central processing unit. A person skilled in the art may understand that the baseband processor and the central processing unit may be alternatively independent processors, and are interconnected by using technologies such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the storage unit in a form of the software program. The processor executes the software program to implement a baseband processing function.

In an example, an antenna that has a transceiver function and a control circuit may be considered as a transceiver module 1501 of the terminal device 1500, and a processor that has a processing function may be considered as a processing module 1502 of the terminal device 1500. As shown in FIG. 15, the terminal device 1500 includes a transceiver module 1501 and a processing module 1502. The transceiver module may also be referred to as a transceiver, a transceiver, a transceiver apparatus, or the like. In a possible implementation, a component configured to implement a receiving function in the transceiver module 1501 may be considered as a receiving module, and a component configured to implement a sending function in the transceiver module 1501 may be considered as a sending module. That is, the transceiver module 1501 includes a receiving module and a sending module. For example, the receiving module may also be referred to as a receiver, a receiver, or a receiving circuit, and the sending module may be referred to as a transmitter, a transmitter, or a transmitting circuit.

FIG. 16 is a schematic diagram of a structure of a communication system according to an embodiment of this application. As shown in FIG. 16, a communication system 1600 in this embodiment may include a network device 1601 and one or more terminal devices 1602. Two terminal devices 1602 are used as examples in the figure. The terminal device 1602 may use a structure of an apparatus embodiment shown in FIG. 12 or FIG. 14 or FIG. 15. Correspondingly, the terminal device 1602 may execute the technical solution related to the terminal device in any one of the foregoing method embodiments. An implementation principle and a technical effect thereof are similar, and details are not described herein again. The network device 1601 may use a structure of an apparatus embodiment shown in FIG. 13 or FIG. 14. Correspondingly, the network device 1601 may execute the technical solution related to the network device in any one of the foregoing method embodiments. An implementation principle and a technical effect thereof are similar, and details are not described herein again.

It should be noted that, in embodiments of this application, division into the modules is an example and is merely logical function division, and may be other division in an actual implementation. Functional modules in embodiments of this application may be integrated into one processing module, each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, the part contributing to the current technology, or all or a part of the technical solutions may be implemented in a form of a software product. The computer software product is stored in a storage medium and includes several instructions for instructing a computer device (which may be a personal computer, a server, or a network device) or a processor to perform all or a part of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that may be accessed by the computer, or a data storage device, such as a server or a data center, integrating one or more available media. The available medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A communication method, comprising:
determining, by a terminal device, a target time-frequency resource in an uplink communication time period in a target subframe, wherein the target time-frequency resource is used to transmit an uplink sounding reference signal SRS and a physical uplink shared channel PUSCH; and
simultaneously sending, by the terminal device, the uplink SRS and the PUSCH to a network device on the target time-frequency resource, wherein
the target time-frequency resource occupies at least one symbol in time domain, and the uplink SRS and the PUSCH occupy a same time-frequency resource.

2. The method according to claim 1, wherein the target time-frequency resource occupies all symbols of the uplink communication time period in the target subframe in time domain.

3. The method according to claim 2, wherein the symbols occupied by the target time-frequency resource comprise a first symbol and a second symbol, the first symbol comprises at least one symbol, and the second symbol comprises at least one symbol; and
a part of frequency domain resources in the first symbol is used to transmit the uplink SRS and the PUSCH, and all frequency domain resources in the second symbol are used to transmit the uplink SRS and the PUSCH.

4. The method according to claim 3, wherein the other part of frequency domain resources in the first symbol is used to transmit a demodulation reference signal DMRS of the PUSCH.

5. The method according to claim 4, wherein all frequency domain resources in the first symbol are combed by the part of frequency domain resources and the other part of frequency domain resources in the first symbol.

6. The method according to claim 5, wherein each resource element RE in the part of frequency domain resources and each RE in the other part of frequency domain resources are spaced apart from each other.

7. The method according to any one of claims 3 to 6, wherein the first symbol is a 1^{st} symbol of the uplink communication time period in the target subframe in time domain.

8. The method according to claim 2, wherein the target time-frequency resource is all frequency domain resources of all symbols of the uplink communication time period in the target subframe.

9. The method according to claim 1, wherein the target time-frequency resource occupies, in time domain, a part of symbols of the uplink communication time period in the target subframe.

10. The method according to claim 9, wherein symbols other than the symbols occupied by the target time-frequency resource of the uplink communication time period in the target subframe are used to transmit a DMRS of the PUSCH.

11. The method according to claim 9 or 10, wherein the symbols occupied by the target time-frequency resource are symbols other than a 1^{st} symbol in the uplink communication time period in the target subframe.

12. The method according to any one of claims 1 to 11, wherein before the terminal device simultaneously sends the uplink SRS and the PUSCH to the network device on a target symbol, the method further comprises:
receiving, by the terminal device, first information from the network device, where the first information indicates that the uplink SRS and the PUSCH are transmitted on a same time-frequency resource of the target subframe.

13. The method according to claim 12, further comprising:
receiving, by the terminal device, second information from the network device, where the second information indicates the target time-frequency resource.

14. The method according to any one of claims 1 to 13, wherein the target subframe is an S subframe.

15. A communication method, comprising:
simultaneously receiving, by a network device, an uplink sounding reference signal SRS and a physical uplink shared channel PUSCH from a terminal device on a target time-frequency resource in an uplink communication time period in a target subframe, wherein the target time-frequency resource is used to transmit the uplink SRS and the PUSCH; and
processing, by the network device, the uplink SRS and the PUSCH, wherein
the target time-frequency resource occupies at least one symbol in time domain, and the uplink SRS and the PUSCH occupy a same time-frequency resource.

16. The method according to claim 15, further comprising:
sending, by the network device, first information to the terminal device, wherein the first information indicates that the uplink SRS and the PUSCH are transmitted on a same time-frequency resource of the target subframe.

17. The method according to claim 16, further comprising:
sending, by the network device, second information to the terminal device, wherein the second information indicates the target time-frequency resource.

18. A communication apparatus, comprising:
a processing module, configured to determine a target time-frequency resource in an uplink communication time period in a target subframe, wherein the target time-frequency resource is used to transmit an uplink sounding reference signal SRS and a physical uplink shared channel PUSCH; and
a transceiver module, configured to simultaneously send the uplink SRS and the PUSCH to a network device on the target time-frequency resource, wherein
the target time-frequency resource occupies at least one symbol in time domain, and the uplink SRS and the PUSCH occupy a same time-frequency resource.

19. A communication apparatus, comprising:
a transceiver module, configured to simultaneously receive an uplink sounding reference signal SRS and a physical uplink shared channel PUSCH from a terminal device on a target time-frequency resource in an uplink communication time period in a target subframe, wherein the target time-frequency resource is used to transmit the uplink SRS and the PUSCH; and
a processing module, configured to process the uplink SRS and the PUSCH, wherein
the target time-frequency resource occupies at least one symbol in time domain, and the uplink SRS and the PUSCH occupy a same time-frequency resource.

20. A communication apparatus, comprising a memory, a processor, and a transceiver, wherein
the memory is configured to store program instructions; and
the processor is configured to invoke the program instructions in the memory to perform the communication method according to any one of claims 1 to 14 or the communication method according to any one of claims 15 to 17.

21. A chip, comprising at least one processor and a communication interface, wherein the communication interface and at least one processor are interconnected through a line, and the at least one processor is configured to run a computer program or instructions, to perform the communication method according to any one of claims 1 to 14 or the communication method according to any one of claims 15 to 17.

22. A computer-readable storage medium, comprising instructions, and when the instructions are run on a computer, the computer is enabled to perform the communication method according to any one of claims 1 to 14 or the communication method according to any one of claims 15 to 17.
